(19) Europäisches Patentamt
European Patent Office
Office européen des brevets

(11) **EP 2 823 010 B1**

(12) **EUROPÄISCHE PATENTSCHRIFT**

(45) Veröffentlichungstag und Bekanntmachung des Hinweises auf die Patenterteilung:
**03.10.2018 Patentblatt 2018/40**

(21) Anmeldenummer: **13703063.1**

(22) Anmeldetag: **07.02.2013**

(51) Int Cl.:
*C09J 7/10* (2018.01)          *C09J 7/40* (2018.01)
*H01L 51/52* (2006.01)

(86) Internationale Anmeldenummer:
**PCT/EP2013/052422**

(87) Internationale Veröffentlichungsnummer:
**WO 2013/131707 (12.09.2013 Gazette 2013/37)**

(54) **VERBUNDSYSTEM ZUR VERKAPSELUNG ELEKTRONISCHER ANORDNUNGEN**

COMPOSITE SYSTEM FOR ENCAPSULATING ELECTRONIC ARRANGEMENTS

SYSTÈME COMPOSITE POUR L'ENCAPSULAGE DE DISPOSITIFS ÉLECTRONIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2012   DE 102012203623**

(43) Veröffentlichungstag der Anmeldung:
**14.01.2015   Patentblatt 2015/03**

(73) Patentinhaber: **tesa SE**
**22848 Norderstedt (DE)**

(72) Erfinder:
• **BAI, Minyoung**
  **22529 Hamburg (DE)**
• **DOLLASE, Thilo**
  **22397 Hamburg (DE)**
• **ELLINGER, Jan**
  **20255 Hamburg (DE)**
• **GRÜNAUER, Judith, Dr.**
  **22117 Hamburg (DE)**

(56) Entgegenhaltungen:
EP-A1- 2 078 608          EP-A1- 2 100 933
WO-A1-2008/149890          WO-A1-2013/018602
US-A- 6 153 302          US-A1- 2007 231 543
US-A1- 2010 143 634

**Beschreibung**

Die vorliegende Erfindung betrifft das technische Gebiet der Klebebänder. Insbesondere schlägt die Erfindung eine Kombination aus einem Klebeband und einem Releaseliner mit spezieller Oberflächenbeschaffenheit vor, mit der eine verbesserte Barrierewirkung gegenüber das Klebeband potenziell permeierenden Substanzen erzielt werden kann.

Optoelektronische Anordnungen werden immer häufiger in kommerziellen Produkten verwendet oder stehen kurz vor der Markteinführung. Derartige Anordnungen umfassen anorganische oder organische elektronische Strukturen, beispielsweise organische, metallorganische oder polymere Halbleiter oder auch Kombinationen davon. Die entsprechenden Produkte sind je nach gewünschter Anwendung starr oder flexibel ausgebildet, wobei eine zunehmende Nachfrage nach flexiblen Anordnungen besteht. Die Herstellung derartiger Anordnungen erfolgt häufig durch Druckverfahren wie Hochdruck, Tiefdruck, Siebdruck, Flachdruck oder auch so genanntes "non impact printing" wie etwa Thermotransferdruck, Tintenstrahldruck oder Digitaldruck. Vielfach werden aber auch Vakuumverfahren wie beispielsweise Chemical Vapor Deposition (CVD), Physical Vapor Deposition (PVD), plasmaunterstützte chemische oder physikalische Depositionsverfahren (PECVD), Sputtern, (Plasma-)Ätzen oder Bedampfung verwendet. Die Strukturierung erfolgt in der Regel durch Masken.

Als Beispiele für bereits kommerziell erhältliche oder in ihrem Marktpotential interessante optoelektronische Anwendungen seien hier elektrophoretische oder elektrochrome Aufbauten oder Displays, organische oder polymere Leuchtdioden (OLEDs oder PLEDs) in Anzeige- und Display-Vorrichtungen oder als Beleuchtung genannt, ferner Elektrolumineszenzlampen, Licht emittierende elektrochemische Zellen (LEECs), organische Solarzellen wie Farbstoff- oder Polymersolarzellen, anorganische Solarzellen, insbesondere Dünnschichtsolarzellen, zum Beispiel auf der Basis von Silizium, Germanium, Kupfer, Indium und Selen, organische Feldeffekt-Transistoren, organische Schaltelemente, organische optische Verstärker, organische Laserdioden, organische oder anorganische Sensoren oder auch organisch- oder anorganisch basierte RFID-Transponder angeführt.

Als technische Herausforderung für die Realisierung einer ausreichenden Lebensdauer und Funktion von optoelektronischen Anordnungen auf dem Gebiet der anorganischen und organischen Optoelektronik, ganz besonders der organischen Optoelektronik, ist ein Schutz der darin enthaltenen Komponenten vor Permeaten zu sehen. Als Permeate werden dabei in der Regel gasförmige oder flüssige Stoffe angesehen, die in einen Festkörper eindringen und diesen gegebenenfalls durchdringen beziehungsweise durchwandern. Dementsprechend können viele niedermolekulare organische oder anorganische Verbindungen Permeate sein, wobei im vorliegend beschriebenen Zusammenhang Wasserdampf und Sauerstoff von besonderer Bedeutung sind.

Eine Vielzahl von optoelektronischen Anordnungen - besonders bei Verwendung von organischen Materialien - ist sowohl gegen Wasserdampf als auch gegen Sauerstoff empfindlich. Während der Lebensdauer der elektronischen Anordnungen ist deshalb ein Schutz durch eine Verkapselung erforderlich, da andernfalls die Leistung über den Anwendungszeitraum nachlässt. Anderenfalls können sich beispielsweise durch eine Oxidation der Bestandteile von Licht emittierenden Anordnungen wie ElektrolumineszenzLampen (EL-Lampen) oder organischen Leuchtdioden (OLED) die Leuchtkraft, bei elektrophoretischen Displays (EP-Displays) der Kontrast oder bei Solarzellen die Effizienz innerhalb kurzer Zeit drastisch verringern.

Auf dem Gebiet der anorganischen und insbesondere der organischen Optoelektronik gibt es daher einen hohen Bedarf an flexiblen Klebelösungen, die eine Barriere für Permeate wie Sauerstoff und/oder Wasserdampf darstellen. Darüber hinaus sollen diese Klebesysteme nicht nur eine gute Haftung zwischen zwei Substraten bewirken, sondern auch weitere Anforderungen wie hohe Scherfestigkeit und Schälfestigkeit, chemische Beständigkeit, Alterungsbeständigkeit, hohe Transparenz, einfache Prozessierbarkeit sowie hohe Flexibilität und Biegsamkeit erfüllen.

Ein nach dem Stand der Technik gängiger Ansatz ist deshalb, die elektronische Anordnung zwischen zwei für Wasserdampf und Sauerstoff undurchlässige Substrate zu legen. Anschließend erfolgt dann eine Versiegelung an den Rändern. Für unflexible Aufbauten werden Glas oder Metallsubstrate verwendet, die eine hohe Permeationsbarriere bieten, aber sehr anfällig für mechanische Belastungen sind. Ferner verursachen diese Substrate eine relativ große Dicke der gesamten Anordnung. Im Falle von Metallsubstraten besteht zudem keine Transparenz. Für flexible Anordnungen hingegen kommen Flächensubstrate, wie transparente oder nicht transparente Folien, zum Einsatz, die mehrlagig ausgeführt sein können. Hierbei können sowohl Kombinationen aus verschiedenen Polymeren, als auch anorganische oder organische Schichten verwendet werden. Der Einsatz solcher Flächensubstrate ermöglicht einen flexiblen, äußerst dünnen Aufbau. Dabei sind für die verschiedenen Anwendungen unterschiedlichste Substrate, wie z.B. Folien, Gewebe, Vliese und Papiere oder Kombinationen daraus möglich.

Um eine möglichst gute Versiegelung zu erzielen, werden spezielle Barriereklebemassen verwendet. Eine gute Klebemasse für die Versiegelung von (opto-)elektronischen Bauteilen weist eine geringe Permeabilität gegen Sauerstoff und insbesondere gegen Wasserdampf auf, hat eine ausreichende Haftung auf der Anordnung und kann gut auf diese auffließen. Eine geringe Haftung auf der Anordnung verringert die Barrierewirkung an der Grenzfläche, wodurch ein Eintritt von Sauerstoff und Wasserdampf unabhängig von den Eigenschaften der Klebmasse ermöglicht wird. Nur wenn der Kontakt zwischen Masse und Substrat durchgängig ist, sind die Masseeigenschaften der bestimmende Faktor für die Barrierewirkung der Klebemasse.

Bei der Anwendung kommt es für die Klebeschichten auf gute Sperrwirkung an. Dabei unterscheidet man zwischen Volumenpermeation und Grenzflächenpermeation. Die Volumenpermeation lässt sich durch die Zusammensetzung des Klebers steuern. Die Grenzflächenpermeation hängt daneben auch von der Auffließgüte der Klebeschicht auf den Klebuntergrund ab. Zur Charakterisierung der Barrierewirkung werden üblicherweise die Sauerstofftransmissionsrate OTR (Oxygen Transmission Rate) sowie die Wasserdampftransmissionsrate WVTR (Water Vapor Transmission Rate) angegeben. Die jeweilige Rate gibt dabei den flächen- und zeitbezogenen Fluss von Sauerstoff bzw. Wasserdampf durch einen Film unter spezifischen Bedingungen von Temperatur und Partialdruck sowie ggf. weiteren Messbedingungen wie relativer Luftfeuchtigkeit an. Je geringer diese Werte sind, desto besser ist das jeweilige Material zur Kapselung geeignet.

Grenzflächenpermeation kann man durch eine Kombination aus verschiedenen Messungen zur Wasserdampfpermeabilitätsmessungen (WVTR) bestimmen. Aus einem sog. MOCON-Test resultiert die Wasserdampfbarriere des Volumens eines Materials, WVTR (MOCON). Ein sog. Calcium-Test, WVTR (Ca-Test), ergibt die Wasserdampfpermeation durch Volumen und Grenzfläche. Die Angabe der Permeation basiert dabei nicht allein auf den Werten für WVTR oder OTR, sondern beinhaltet immer auch eine Angabe zur mittleren Weglänge der Permeation, wie z.B. die Dicke des Materials, oder eine Normalisierung auf eine bestimmte Weglänge. Für eine gegebene Klebemasse ist die Volumenpermeation bei gleichen Messbedingungen unverändert. Änderungen im WVTR (Ca-Test) lassen sich dann auf Unterschiede in der Grenzflächenpermeation zurückführen.

Die Permeabilität P ist ein Maß für die Durchlässigkeit eines Körpers für Gase und/oder Flüssigkeiten. Ein niedriger P-Wert kennzeichnet eine gute Barriererewirkung. Die Permeabilität P ist ein spezifischer Wert für ein definiertes Material und einen definierten Permeanten unter stationären Bedingungen bei bestimmter Permeationsweglänge, Partialdruck und Temperatur. Die Permeabilität P ist das Produkt aus Diffusions-Term D und Löslichkeits-Term S:

$$P = D * S$$

Der Löslichkeitsterm S beschreibt die Affinität der Barriereklebemasse zum Permeanten. Im Fall von Wasserdampf wird beispielsweise ein geringer Wert für S von hydrophoben Materialien erreicht. Der Diffusionsterm D ist ein Maß für die Beweglichkeit des Permeanten im Barrierematerial und ist direkt abhängig von Eigenschaften wie der Molekülbeweglichkeit oder dem freien Volumen. Oft werden bei stark vernetzten oder hochkristallinen Materialen für D relativ niedrige Werte erreicht. Hochkristalline Materialien sind jedoch in der Regel weniger transparent, und eine stärkere Vernetzung führt zu einer geringeren Flexibilität. Die Permeabilität P steigt üblicherweise mit einer Erhöhung der molekularen Beweglichkeit an, etwa auch wenn die Temperatur erhöht oder der Glasübergangspunkt überschritten wird.

Ansätze, um die Barrierewirkung einer Klebemasse zu erhöhen, müssen die beiden Parameter D und S insbesondere im Hinblick auf den Einfluss auf die Durchlässigkeit von Wasserdampf und Sauerstoff berücksichtigen. Zusätzlich zu diesen chemischen Eigenschaften müssen auch Auswirkungen physikalischer Einflüsse auf die Permeabilität bedacht werden, insbesondere die mittlere Permeationsweglänge und Grenzflächeneigenschaften (Auffließverhalten der Klebemasse, Haftung). Die ideale Barriereklebemasse weist geringe D-Werte und S-Werte bei sehr guter Haftung auf dem Substrat auf.

Ein geringer Löslichkeits-Term S ist meist unzureichend, um gute Barriereeigenschaften zu erreichen. Ein klassisches Beispiel dafür sind insbesondere Siloxan-Elastomere. Die Materialien sind äußerst hydrophob (kleiner Löslichkeits-Term), weisen aber durch ihre frei drehbare Si-O Bindung (großer Diffusions-Term) eine vergleichsweise geringe Barrierewirkung gegen Wasserdampf und Sauerstoff auf. Für eine gute Barrierewirkung ist also eine gute Balance zwischen Löslichkeits-Term S und Diffusions-Term D notwendig.

Hierfür wurden bisher vor allem Flüssigklebstoffe und Adhäsive auf Basis von Epoxiden verwendet (WO98/21287 A1; US 4,051,195 A; US 4,552,604 A). Diese haben durch eine starke Vernetzung einen geringen Diffusionsterm D. Ihr Haupteinsatzgebiet sind Randverklebungen starrer Anordnungen, aber auch mäßig flexible Anordnungen. Eine Aushärtung erfolgt thermisch oder mittels UV-Strahlung. Eine vollflächige Verklebung ist aufgrund des durch die Aushärtung auftreten Schrumpfes kaum möglich, da es beim Aushärten zu Spannungen zwischen Kleber und Substrat kommt, die wiederum zur Delaminierung führen können.

Der Einsatz dieser flüssigen Klebstoffe birgt eine Reihe von Nachteilen. So können niedermolekulare Bestandteile (VOC - volatile organic compound) die empfindlichen elektronischen Strukturen der Anordnung schädigen und den Umgang in der Produktion erschweren. Der Klebstoff muss aufwendig auf jeden einzelnen Bestandteil der Anordnung aufgebracht werden. Die Anschaffung von teuren Dispensern und Fixiereinrichtungen ist notwendig, um eine genaue Positionierung zu gewährleisten. Die Art der Auftragung verhindert zudem einen schnellen kontinuierlichen Prozess, und auch durch den anschließend erforderlichen Laminationsschritt kann durch die geringe Viskosität das Erreichen einer definierten Schichtdicke und Verklebungsbreite in engen Grenzen erschwert sein.

Des Weiteren weisen solche hochvernetzten Klebstoffe nach dem Aushärten nur noch eine geringe Flexibilität auf. Der Einsatz von thermisch-vernetzenden Systemen wird im niedrigen Temperaturbereich oder bei 2-Komponenten-Systemen durch die Topfzeit begrenzt, also die Verarbeitungszeit, bis eine Vergelung stattgefunden hat. Im hohen Temperaturbereich und insbesondere bei langen Reaktionszeiten begrenzen wiederum die empfindlichen (opto-) elektronischen Strukturen die Verwendbarkeit derartiger Systeme - die maximal anwendbaren Temperaturen bei (opto-)elektronischen Strukturen liegen oft bei 60°C, da bereits ab dieser Temperatur eine Vorschädigung eintreten kann. Insbesondere flexible Anordnungen, die organische Elektronik enthalten und mit transparenten Polymerfolien oder Verbunden aus Polymerfolien und anorganischen Schichten gekapselt sind, setzen hier enge Grenzen. Dies gilt auch für Laminierschritte unter großem Druck. Um eine verbesserte Haltbarkeit zu erreichen, ist hier ein Verzicht auf einen temperaturbelastenden Schritt und eine Laminierung unter geringerem Druck von Vorteil.

Alternativ zu den thermisch härtbaren Flüssigklebstoffen werden mittlerweile vielfach auch strahlenhärtende Klebstoffe eingesetzt (US 2004/0225025 A1). Die Verwendung von strahlenhärtenden Klebstoffen vermeidet eine lange andauernde Wärmebelastung der elektronischen Anordnung. Jedoch kommt es durch die Bestrahlung zu einer kurzfristigen punktuellen Erhitzung der Anordnung, da neben einer UV-Strahlung in der Regel auch ein sehr hoher Anteil an IR-Strahlung emittiert wird. Weitere oben genannte Nachteile von Flüssigklebstoffen wie VOC, Schrumpf, Delamination und geringe Flexibilität bleiben ebenfalls erhalten. Probleme können durch zusätzliche flüchtige Bestandteile oder Spaltprodukte aus den Photoinitiatoren oder Sensitizern entstehen. Zudem muss die Anordnung durchlässig für UV-Licht sein.

Da Bestandteile insbesondere organischer Elektronik und viele der eingesetzten Polymere häufig empfindlich gegen UV-Belastung sind, ist ein länger andauernder Außeneinsatz nicht ohne weitere zusätzliche Schutzmaßnahmen, etwa weitere Deckfolien möglich. Diese können bei UV-härtenden Klebesystemen erst nach der UV-Härtung aufgebracht werden, was die Komplexität der Fertigung und die Dicke der Anordnung zusätzlich erhöht.

US 2006/0100299 A1 offenbart ein UV-härtbares Haftklebeband zur Kapselung einer elektronischen Anordnung. Das Haftklebeband weist eine Klebemasse auf Basis einer Kombination eines Polymers mit einem Erweichungspunkt von größer 60°C, eines polymerisierbaren Epoxidharzes mit einem Erweichungspunkt von unter 30°C und einem Photoinitiator auf. Bei den Polymeren kann es sich um Polyurethan, Polyisobutylen, Polyacrylnitril, Polyvinylidenchlorid, Poly(meth)acrylat oder Polyester, insbesondere aber um ein Acrylat handeln. Des Weiteren sind Klebharze, Weichmacher oder Füllstoffe enthalten.

Acrylatmassen haben eine sehr gute Beständigkeit gegenüber UV-Strahlung und verschiedenen Chemikalien, besitzen aber sehr unterschiedliche Klebkräfte auf verschiedenen Untergründen. Während die Klebkraft auf polaren Untergründen wie Glas oder Metall sehr hoch ist, ist die Klebkraft auf unpolaren Untergründen wie beispielsweise Polyethylen oder Polypropylen eher gering. Hier besteht die Gefahr der Diffusion an der Grenzfläche in besonderem Maße. Zudem sind diese Massen sehr polar, was eine Diffusion insbesondere von Wasserdampf, trotz nachträglicher Vernetzung, begünstigt. Durch den Einsatz polymerisierbarer Epoxidharze wird diese Tendenz weiter verstärkt.

Die in US 2006/0100299 A1 genannte Ausführung als Haftklebemasse hat den Vorteil einer einfachen Applikation, leidet aber ebenfalls unter möglichen Spaltprodukten durch die enthaltenen Photoinitiatoren, einer zwangsläufigen UV-Durchlässigkeit des Aufbaus und einer Verringerung der Flexibilität nach der Aushärtung. Zudem ist durch den geringen Anteil an Epoxidharzen oder anderen Vernetzern, der für eine Erhaltung der Haftklebrigkeit und insbesondere der Kohäsion notwendig ist, eine nur sehr viel geringere Vernetzungsdichte als mit Flüssigklebern erreichbar.

Haftklebebänder benötigen in der Regel durch die relativ hochmolekularen Polymere im Gegensatz zu Flüssigklebstoffen für eine gute Benetzung und Haftung auf der Oberfläche eine gewisse Zeit, ausreichenden Druck und eine gute Balance zwischen viskosem Anteil und elastischen Anteil. Allgemein führt das nachträgliche Vernetzen der Klebemassen zu einem Schrumpf der Masse. Dies kann zu einer Verringerung der Haftung an der Grenzfläche führen und wiederum die Permeabilität erhöhen.

Die WO 2007/087281 A1 offenbart ein transparentes flexibles Haftklebeband auf Basis von Polyisobutylen (PIB) für elektronische Anwendungen, insbesondere OLED. Dabei wird Polyisobutylen mit einem Molekulargewicht von mehr als 500.000 g/mol und ein hydriertes cyclisches Harz verwendet. Optional ist der Einsatz eines photopolymerisierbaren Harzes und eines Photoinitiators möglich.

Klebemassen auf der Basis von Polyisobutylen weisen aufgrund ihrer geringen Polarität gute Barriereeigenschaften gegen Wasserdampf auf, haben aber selbst bei hohen Molekulargewichten eine relativ geringe Kohäsivität, weshalb schon bei Raumtemperatur und insbesondere bei erhöhten Temperaturen, unter Belastung eine Kriechneigung festgestellt werden kann und sie deshalb eine geringe Scherfestigkeit aufweisen. Der Anteil an niedermolekularen Bestandteilen kann nicht beliebig reduziert werden, da sonst die Haftung deutlich verringert wird und die Grenzflächenpermeation zunimmt. Bei Einsatz eines hohen Anteils an funktionellen Harzen, der aufgrund der sehr geringen Kohäsion der Masse notwendig ist, wird die Polarität der Masse wieder erhöht und damit der Löslichkeits-Term vergrößert.

Demgegenüber zeigt eine Haftklebemasse mit ausgeprägter Vernetzung zwar gute Kohäsion, doch ist das Auffließverhalten beeinträchtigt. Die Haftklebemasse kann sich nur unzureichend an die Rauhigkeit einer Substratoberfläche anpassen, wodurch die Permeation an der Grenzfläche erhöht ist. Zudem kann eine Haftklebemasse mit ausgeprägter Vernetzung nur in geringerem Maße Verformungsenergie, wie sie unter Belastung auftritt, dissipieren. Durch beide Phänomene wird die Klebkraft reduziert. Eine geringfügig vernetzte Haftklebemasse kann dagegen zwar gut auf raue Oberflächen auffließen und Verformungsenergie dissipieren, so dass die Anforderungen an die Adhäsion erfüllt sein können, jedoch widersteht die Haftklebemasse auf Grund einer reduzierten Kohäsion nur unzureichend einer Belastung.

Aus dem Stand der Technik ist zudem eine Haftklebemasse ohne Barriereeigenschaften bekannt (WO 03/065470 A1), die in einem elektronischen Aufbau als Transferklebemasse verwendet wird. Die Klebemasse enthält einen funktionellen Füllstoff, der mit Sauerstoff oder Wasserdampf innerhalb des Aufbaus reagiert. Damit ist eine einfache Applikation eines Scavengers innerhalb des Aufbaus möglich. Für die Versiegelung des Aufbaus nach außen wird ein weiteres Adhäsiv mit geringer Durchlässigkeit verwendet.

Darüber hinaus ist eine Klebemasse auf Basis von Vinylaromatenblockcopolymeren beispielsweise aus der US 4,985,499 A1 bekannt. Diese Schrift beschreibt verschiedene vorteilhafte Zusammensetzungen der Klebemasse.

Ferner ist aus dem Stand der Technik die Barrierewirkung von Blockcopolymeren bekannt (US 2002/0188053 A1). Hier werden Polymere auf dieser Basis für die Versiegelung von elektrophoretischen Displays eingesetzt, indem die aktiven Substanzen nach deren Aufbringung mit einer Lösung des Polymers überzogen werden, die nach dem Trocknen als Siegelschicht und Fixierung wirkt. Diese Polymere weisen keine selbstklebenden Eigenschaften auf und erreichen eine Haftung an den anderen Komponenten des elektrophoretischen Displayaufbaus nur durch die Benetzung aus der Lösung. Dies bedingt den Einsatz von Lösemitteln, erzeugt Emissionen und ist in der Dosierung schwierig.

Neben der Ausgestaltung der Klebemassen selbst rücken zunehmend auch die zum Schutz der Klebemassen eingesetzten Liner in den Blickpunkt, welche die Klebemasse im Zeitraum zwischen deren Herstellung und Applikation vor dem Zutritt von Substanzen schützen sollen, die für die zu verbindenden oder zu versiegelnden Substrate schädlich sein könnten. So ist es aus EP 2 078 608 A1 bekannt, Liner mit einer speziellen Permeationsbarriere aus Kunststoff auszurüsten.

DE 10 2009 046 362 befasst sich mit Polyolefinbasierenden Haftklebemassen. Barriereanwendungen sind als Beispiele für solche Klebemassen genannt. WO 2009/086095 befasst sich mit Barriereklebebändern, die in der Klebemasse Trocknungsmittel enthalten. Beide Schriften erwähnen Polyester- oder Polypropylen-basierende Trennliner.

US 4,454,266 offenbart Trennliner mit verschiedenen Rauheiten des Linerträgermaterials.

EP 1 518 912 lehrt eine Klebemasse zur Kapselung eines Elektrolumineszenzelements, die eine photokationisch härtbare Verbindung und einen photokationischen Initiator enthält. Es werden Papier-basierende und Polyester-basierende Trennliner genannt.

US 2009/026934 beschreibt Klebemassenschichten zur Verkapselung organischer Elektroluminszezenzelemente. Die Klebemassen enthalten Polyisobutylen und ein hydriertes Kohlenwasserstoffharz. Als Trennliner wird im Beispiel ein Polyesterliner angegeben.

US 2010/0137530 offenbart härtbare Klebeschichten auf Basis von Epoxid-Harz-Mischungen. Eine Sorte Epoxid-Harz weist eine geringe Molmasse auf, eine weitere eine höhere. Es wird kationisch gehärtet, initiiert durch UV. Als Trennliner werden Polymerliner genannt.

US 6,153,302 schlägt, um UV-empfindliche Bahnen vor unerwünschter UV-Einstrahlung zu schützen, vor, dass ein Trennliner verwendet wird, der aktinische Strahlung blockiert.

EP 2 100 933 A1 beschreibt doppelseitige Klebebänder, deren Haftklebmasseschichten sich jeweils mit einer Release-beschichteten Kunststofffolie in Kontakt befinden, deren Releasebeschichtete Seite eine arithmetisch gemittelte Rauheit (Ra) von 0,05 $\mu m$ oder weniger aufweist.

US 2010/0143634 A1 offenbart Klebebänder aus transparentem Kunststofffolien-Substrat, einer dünnen, ebenfalls transparenten, leitfähigen Folie und einer Haftklebmasseschicht mit einer Oberflächenrauhigkeit Ra von 2 bis 130 nm auf der Seite , an welcher das Kunststofffoliensubstrat haftet. Die Klebebänder werden unter Verwendung entsprechend glatter Releaseliner hergestellt.

WO 2008/149890 A1 beschreibt Klebebänder für optische Folien, die eine Releaseschicht und eine darauf aufgebrachte Klebeschicht umfassen, wobei die Oberflächenrauheit der Klebeschichtoberfläche auf der Releaseschicht 2 bis 150 nm beträgt.

US 2007/0231543 A1 offenbart einen Releaseliner, der eine Kautschuk-basierende Schicht auf einem Substrat umfasst, wobei die durchschnittliche Rauheit (Ra) der Substratoberfläche oder einer Zwischenschicht, die in Kontakt mit der Releaseschicht gebracht wird, 0,06 $\mu m$ oder weniger beträgt.

Es besteht nach wie vor ein hoher Bedarf an Klebesystemen für die Verkapselung empfindlicher elektronischer Anordnungen, die eine starke Barrierewirkung gegenüber Schadsubstanzen aufweisen. Aufgabe der Erfindung ist es daher, ein derartiges Klebesystem zur Verfügung zu stellen, mit dem sich die Nachteile des Standes der Technik umgehen lassen und das insbesondere über eine gesteigerte Barrierewirkung gegenüber Wasser und Sauerstoff verfügt. Daneben soll das System einen geringen Gleichgewichtsfeuchtigkeitshaushalt aufweisen und idealerweise auch vor Licht- bzw. UV-Einwirkung schützen.

Der Lösung der Aufgabe liegt der Gedanke zugrunde, einen Liner mit spezieller Oberflächenstruktur einzusetzen. Ein erster Gegenstand der Erfindung ist daher ein Verbundsystem zur Verkapselung elektronischer Anordnungen, das mindestens

> a) ein Klebeband, welches mindestens eine Haftklebemasse zur direkten Applikation auf einem Substrat enthält; und
>
> b) mindestens einen auf der Haftklebemasse unmittelbar aufliegenden Releaseliner

umfasst, wobei die der Haftklebemasse zugewandte Fläche des Releaseliners eine Oberflächenrauheit, ermittelt als arithmetisches Mittel $S_a$ gemäß ISO/FDIS 25178-2:2011 der Beträge von mindestens 10.000 Höhenwerten des Profils einer Teilfläche von mindestens 200 $\mu$m x 200 $\mu$m, von kleiner als 70 nm aufweist und die Haftklebemasse eine Volumenpermeation WVTR (MOCON), gemessen wie hierin angegeben, von < 10 g/(m²*d) aufweist.

Ein derartiges Verbundsystem bringt neben der durch Art und Zusammensetzung der Klebemasse determinierten Volumensperrwirkung vorteilhaft auch die Grenzflächensperrwirkung zur Geltung und ermöglicht auf diese Weise die Zurverfügungstellung von Klebebändern mit exzellenter Barrierefunktion. Es wird angenommen, dass sich die Oberflächenbeschaffenheit des Liners in die Klebemassenschicht abprägt, so dass die Klebemasse selbst kurz vor dem Verkleben auf dem Substrat sehr glatt ist und so ein optimiertes Auffließen weitestgehend ohne Einschlüsse von Luftkanälen auf dem Substrat möglich wird. Auf diese Weise trägt die Lineroberfläche sehr vorteilhaft zur Ausprägung der Barrierewirkung bei. Insbesondere ist dies bei weniger fließfähigen Klebemassen von Vorteil, da die durch den Liner eingeprägte Oberflächenstruktur in diesem Fall sehr zeitstabil ist. Dies bedeutet, dass über einen längeren Zeitraum kein Zerfließen im ausgedeckten Zustand erfolgt.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Klebemassen miteinander in Kontakt kommen, oder um bei einseitig klebenden Klebebändern eine Verklebung der Klebemasse auf dem Träger zu verhindern, werden die Klebebänder vor dem Wickeln mit einem Abdeckmaterial (auch als Trennmaterial bezeichnet) eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebemassen (Transferklebeband) und Klebebandabschnitten (zum Beispiel Etiketten) eingesetzt.

Unter einem Liner wird demgemäß ein eine antihaftende (abhäsive) Oberfläche aufweisendes Abdeckmaterial verstanden, das zum temporären Schutz einer Klebemasse direkt auf die Masse aufgebracht wird und in der Regel unmittelbar vor Applikation der Klebemasse durch einfaches Abziehen entfernt werden kann.

Diese Releaseliner sorgen des Weiteren dafür, dass die Klebemasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die richtige Seite der Klebemasse zuerst freigelegt wird.

Ein Liner ist nicht Bestandteil eines Klebebandes, sondern nur ein Hilfsmittel zu dessen Herstellung, Lagerung oder für die Weiterverarbeitung. Darüber hinaus ist ein Liner im Gegensatz zu einem Klebebandträger nicht fest mit einer Klebstoffschicht verbunden, sondern der Verbund ist nur temporär und nicht dauerhaft.

Erfindungsgemäß weist die der Haftklebemasse zugewandte Fläche des Releaseliners eine Oberflächenrauheit, ermittelt als arithmetisches Mittel $S_a$ gemäß ISO/FDIS 25178-2:2011 der Beträge von mindestens 10.000 Höhenwerten des Profils einer Teilfläche von mindestens 200 $\mu$m x 200 $\mu$m, von kleiner als 70 nm auf. Bevorzugt weist die der Haftklebemasse zugewandte Fläche des Releaseliners eine Oberflächenrauheit, ermittelt als arithmetisches Mittel $S_a$ gemäß ISO/FDIS 25178-2:2011 der Beträge von mindestens 10.000 Höhenwerten des Profils einer Teilfläche von mindestens 200 $\mu$m x 200 $\mu$m, von kleiner als 30 nm auf. Liner mit derartig glatten Oberflächen haben sich als hervorragend geeignet erwiesen, um Klebebänder mit sehr geringer Grenzflächenpermeabilität für Feuchtigkeit und Sauerstoff zur Verfügung zu stellen. Mit dem erfindungsgemäßen Verbundsystem können WVTR(Ca-Test)-Werte von < 1,5 g/(m²*d), vorzugsweise von < 1,0 g/(m²*d) für eine Klebemasse mit einer Volumenpermeation WVTR (MOCON) von < 10 g/(m²*d) erzielt werden.

Die Oberflächenrauheit des Releaseliners wird erfindungsgemäß als arithmetisches Mittel $S_a$ gemäß ISO/FDIS 25178-2:2011 der Beträge von mindestens 10.000 Höhenwerten des Profils einer Teilfläche von mindestens 200 $\mu$m x 200 $\mu$m ermittelt. Die Norm ISO/FDIS 25178-2:2011 beruht darauf, dass die betreffende Oberfläche mit einem optischen Profilometer vermessen wird. Dabei wird das Oberflächenprofil als Interferenzmuster aufgezeichnet. Aus den erhaltenen Daten lässt sich mittels einer üblicherweise zu dem Profilometer gehörenden Software gemäß den in der Norm enthaltenen Angaben u. a. die sogenannte "arithmetical mean height" $S_a$ berechnen. Der Begriff "Beträge" wird vorliegend im mathematischen Sinne verstanden, d. h. die Höhenwerte fließen als Absolutwert und somit als nichtnegative Zahl in die Berechnung von $S_a$ ein.

Als Profilometer werden üblicherweise optische 3D-Mikroskope oder Rasterkraftmikroskope wie beispielsweise das von der Firma Bruker vertriebene "Weisslicht-Interferometer Contour GT® 3D Optical Microscope" verwendet. Diese Geräte ermitteln u. a. innerhalb einer üblicherweise in der x-y-Ebene liegenden Fläche den Höhenparameter z für eine große Anzahl von Messpunkten in der x-y-Ebene. Die so erhaltene Menge an Roh-Daten ist sehr groß, so dass sie mittels einer Gerätesoftware auf in der Norm bestimmte, durch mathematische Verfahren erhaltene Kenngrößen reduziert wird.

Releaseliner umfassen üblicherweise und erfindungsgemäß bevorzugt zumindest je eine Trägerschicht und eine Trennschicht. Die Trennschicht ist dem Verwendungszweck des Liners entsprechend vorzugsweise abhäsiv eingestellt. Darunter wird verstanden, dass die Trennschicht eine geringere Adhäsion zu der abzudeckenden Klebemasse aufweist als die Klebemasse zum in ihrer Anwendung vorgesehen Applikationsuntergrund und gegebenenfalls zu dem zur Klebemasse gehörenden Trägermaterial.

Das Material der Trennschicht ist bevorzugt ausgewählt aus der Gruppe umfassend Silikone, fluorierte Silikone, Silikon-Copolymere, Wachse, Carbamate, Fluorpolymere und Polyolefine oder Mischungen aus zwei oder mehr der genannten Stoffe. Besonders bevorzugt ist das Material der abhäsiven Trennschicht ausgewählt aus Silikonen und Polyolefinen.

Das die Trennschicht bildende System ist vorzugsweise so eingestellt, dass eine Diffusion von abhäsiven Substanzen in die Klebemasse quasi ausbleibt. Analytisch lassen sich gegebenenfalls noch Substanzen aus der abhäsiven Beschichtung nachweisen, welche jedoch auf mechanischen Abrieb zurückzuführen sind. Bevorzugt weist die abhäsive Trennschicht quasi keinen Dampfdruck bei Raumtemperatur auf.

Besonders bevorzugt besteht die Trennschicht aus einem Silikon-System. Zur Herstellung solcher Silikon-Systeme werden bevorzugt vernetzbare Silikonsysteme eingesetzt. Dazu zählen Mischungen aus Vernetzungskatalysatoren und so genannten thermisch härtbaren kondensations- oder additionsvernetzenden Polysiloxanen. Für kondensationsvernetzende Silikonsysteme sind als Vernetzungskatalysatoren häufig Zinnverbindungen wie Dibutylzinndiacetat in der Masse zugegen.

Silikonbasierende Trennmittel auf additionsvernetzender Basis lassen sich durch Hydrosilylierung härten. Diese Trennmittel umfassen üblicherweise die folgenden Bestandteile:

- ein alkenyliertes Polydiorganosiloxan (insbesondere lineare Polymere mit endständigen Alkenylgruppen),
- ein Polyorganowasserstoffsiloxan-Vernetzungsmittel sowie
- einen Hydrosilylierungskatalysator.

Als Katalysatoren für additionsvernetzende Silikonsysteme (Hydrosilylierungs-Katalysatoren) haben sich beispielsweise Platin oder Platinverbindungen, wie zum Beispiel der Karstedt-Katalysator (eine Pt(0)-Komplexverbindung) durchgesetzt.

Thermisch härtende Trennbeschichtungen sind somit häufig Mehrkomponentensysteme, welche typischerweise aus folgenden Komponenten bestehen:

a) einem linearen oder verzweigten Dimethylpolysiloxan, welches aus ca. 80 bis 200 Dimethylpolysiloxan-Einheiten besteht und an den Kettenenden mit Vinyldimethylsiloxy-Einheiten abgestoppt ist. Typische Vertreter sind zum Beispiel lösungsmittelfreie, additionsvernetzende Silikonöle mit endständigen Vinylgruppen, wie Dehesive® 921 oder 610, beide kommerziell erhältlich bei der Wacker-Chemie GmbH;

b) einem linearen oder verzweigten Vernetzer, welcher üblicherweise aus Methylhydrogensiloxy- und Dimethylsiloxy-Einheiten zusammengesetzt ist, wobei die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei der Wacker-Chemie GmbH kommerziell erhältlich sind;

c) einem Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei der Wacker-Chemie GmbH;

d) einem silikonlöslichen Platinkatalysator wie zum Beispiel einem Platindivinyltetramethyldisiloxan-Komplex, welcher üblicherweise als Karstedt-Komplex bezeichnet wird und beispielsweise unter der Bezeichnung Katalysator OL bei der Wacker-Chemie GmbH kommerziell erhältlich ist.

Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierten Siloxanen verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Silikonhaltige Systeme lassen sich, beispielsweise bei Dow Corning, Wacker oder Rohm&Haas, kommerziell erwerben.

Beispielhaft sei "Dehesive® 914" genannt, das ein Vinylpolydimethylsiloxan, den Vernetzer "Crosslinker V24", ein Methylhydrogenpolysiloxan und den Katalysator "Ca-

talyst OI", einen Platin-Katalysator in Polydimethylsiloxan, enthält. Dieses System ist bei der Wacker-Chemie GmbH erhältlich.

Verwendbar ist des Weiteren zum Beispiel das auf dem Markt erhältliche additionsvernetzende Silikon-Release-System "Dehesive® 940A" der Wacker-Chemie mit einem zugehörigen Katalysatorsystem, das im unvernetzten Zustand aufgetragen wird und dann nachträglich im aufgetragenen Zustand vernetzt.

Von den genannten Silikonen haben die additionsvernetzenden Silikone die größte ökonomische Bedeutung. Eine unerwünschte Eigenschaft dieser Systeme ist allerdings ihre Empfindlichkeit gegenüber Katalysatorgiften, wie zum Beispiel Schwermetall-, Schwefel- und Stickstoffverbindungen (vgl. hierzu "Chemische Technik, Prozesse und Produkte" von R. Dittmeyer et al., Band 5, 5. Auflage, Wiley-VCH, Weinheim, Deutschland, 2005, Kapitel 6-5.3.2, Seite 1142). Allgemein gilt, dass Elektronendonatoren als Platingifte angesehen werden können (A. Colas, Silicone Chemistry Overview, Technical Paper, Dow Corning). Demnach sind auch Phosphorverbindungen wie Phosphine und Phosphite als Platingifte anzusehen. Die Präsenz von Katalysatorgiften führt dazu, dass die Vernetzungsreaktion zwischen den unterschiedlichen Bestandteilen eines Silikontrennlackes nicht mehr oder nur zu einem geringen Teil stattfindet. Daher wird bei der Herstellung von antiadhäsiven Silikonbeschichtungen die Anwesenheit von Kontaktgiften, insbesondere von Platingiften, streng vermieden.

Besondere Ausführungen der Silikonsysteme sind Polysiloxan-Blockcopolymere, zum Beispiel mit Harnstoff-Block, wie sie von der Firma Wacker unter dem Handelsnamen "Geniomer" angeboten werden, oder Trennsysteme aus Fluorsilikonen, die insbesondere bei Klebebändern mit Silikonklebemassen eingesetzt werden.

Polyolefinische Trennschichten können sowohl aus thermoplastischen, nicht elastischen als auch aus elastischen Materialien bestehen. Zum Beispiel können derartige Trennschichten auf Polyethylen basieren. Dafür sind Polyethylene im gesamten realisierbaren Dichtebereich von circa 0,86 g/cm$^3$ bis 1 g/cm$^3$ nutzbar. Für bestimmte Anwendungen bieten sich Polyethylene niederer Dichte bevorzugt an, da sie häufig niedrigere Trennkräfte bewirken.

Trennschichten mit elastischen Eigenschaften können gleichfalls aus olefinhaltigen Elastomeren bestehen. Beispiele umfassen sowohl statistische Copolymere als auch Blockcopolymere. Von den Blockcopolymeren seien beispielhaft Ethylen-Propylen-Kautschuke, Butylkautschuk, Polyisobutylen, Ethylen-Blockcopolymere sowie teilweise und vollständig hydrierte Styrol-Dien-Blockcopolymere wie zum Beispiel Styrol-Ethylen/Butylen- und Styrol-Ethylen/Propylen-Blockcopolymere genannt.

Geeignete Trennschichten können ferner auch durch Acrylatcopolymere gestellt werden. Bevorzugte Ausführungsformen dieser Variante sind Acrylatpolymere mit einer statischen Glastemperatur (mid-point-TG ermittelt über Differentialcalorimetrie) unterhalb Raumtemperatur. Die Polymere sind typischerweise vernetzt. Die Vernetzung kann dabei chemischer oder physikalischer Natur, wie sie beispielsweise in Blockcopolymeren realisiert ist, sein.

Als Trägermaterial des Liners können insbesondere Folien eingesetzt werden. Bei Folien kann es sich um Kunststofffolien, Metallfolien, Verbundfolien, die Metallfolien enthalten, oder Folien, die eine Metallschicht durch Sputtern oder Bedampfen erhalten haben, handeln. Dabei werden dimensionsstabile Kunststofffolien bevorzugt. Der Liner enthält daher bevorzugt mindestens eine Trägerschicht, die mindestens 80 Gew.-%, bezogen auf das Gesamtgewicht der Trägerschicht, Polyester, insbesondere Polyethylenterephthalat, zum Beispiel biaxial verstrecktes Polyethylenterephthalat, oder Polyolefine, insbesondere Polybuten, Cycloolefincopolymere, Polymethylpenten, Polypropylen oder Polyethylen, zum Beispiel monoaxial verstrecktes Polypropylen, biaxial verstrecktes Polypropylen oder biaxial verstrecktes Polyethylen, enthält. Besonders bevorzugt enthält der Releaseliner mindestens eine Trägerschicht, die mindestens 80 Gew.-%, bezogen auf das Gesamtgewicht der Trägerschicht, Polyolefin enthält. Ganz besonders bevorzugt enthält der Liner mindestens eine Trägerschicht, die mindestens 80 Gew.-%, bezogen auf das Gesamtgewicht der Trägerschicht, Polypropylen, insbesondere biaxial orientiertes Polypropylen (BOPP) enthält. Insbesondere enthält der Liner mindestens eine Trägerschicht, die aus Polypropylen, beispielsweise aus biaxial orientiertem Polypropylen, besteht. BOPP-basierte Liner zeigen sehr vorteilhaft eine extrem geringe Tendenz zur Feuchtigkeitsaufnahme.

Grundsätzlich sind neben den vorstehend aufgeführten auch weitere Trägerschichtmaterialien einsetzbar, auch wenn sie zunächst nicht die erfindungsgemäß geforderte Glätte aufweisen. Diese lässt sich zum Beispiel durch das Aufbringen der Trennschicht erzielen, z. B. im Wege des sogenannten "Glattrakelns" (siehe beispielsweise unter "Surface Engineering" in B. A. MacDonald et al., "Flexible Flat Panel Displays", C. P. Crawford (Hrsg.), 2005, Wiley, Hoboken).

Das Material der Trennschicht und das Material der Trägerschicht müssen nicht als homogene Materialien vorliegen, sondern können auch aus Mischungen mehrerer Materialien bestehen. So können die Materialien jeweils zur Optimierung der Eigenschaften und/oder Verarbeitung mit einem oder mehreren Additiven wie Harzen, Wachsen, Weichmachern, Füllstoffen, Pigmenten, UV-Absorbern, Lichtschutzmitteln, Alterungsschutzmitteln, Vernetzungsmitteln, Vernetzungspromotoren, Entschäumern, Entgasungsmitteln, Benetzungsmitteln, Dispergierhilfsmitteln, Rheologieadditiven oder Elastomeren abgemischt sein.

In einer bevorzugten Ausführungsform enthält der Releaseliner mindestens eine Trägerschicht und mindestens eine Sperrschicht. Unter einer "Sperrschicht" wird eine Barriereschicht gegen ein oder mehrere spezifische(s) Permeat(e), insbesondere gegen Wasserdampf und Sauerstoff, verstanden. Es ist erfindungsgemäß ebenfalls bevorzugt, wenn der Liner mindestens eine Trägerschicht enthält und diese Trägerschicht eine Barrierefunktion gegen ein oder mehrere spezifische(s) Permeat(e) aufweist.

Die Sperrschicht kann aus organischen oder anorganischen Materialien bestehen. Bevorzugt wird die Sperrschicht, alternativ auch als Barriereschicht bezeichnet, aus zumindest einer Kunststofffolie gebildet, die aus der Gruppe bestehend aus PUR, PP, PET, PVC, PVDC, PEN (Polyethylen-2,6-naphthalat), PAN (Polyacrylnitrile), EVOH (Ethylen-Vinyl-Alkohol-Copolymere), Polyamiden, Polyamid-6, Poly($\epsilon$-caprolactam) und insbesondere Polyacrylaten (PA) sowie Nanokompositen auf Basis der vorstehenden Polymere ausgewählt ist.

Bei Nanokompositen handelt es sich um ein mit Schichtsilicat gefülltes Polymer. Die Schichtsilicat-Teilchen haben eine plättchenförmige Struktur ähnlich wie Talkum. Im Gegensatz zu Talkum ist die Teilchengröße jedoch erheblich kleiner (Nanometerbereich). Diese Teilchen werden bei der Extrusion ausgerichtet und bilden eine Schichtstruktur. Die Teilchen selbst sind wie Glas völlig undurchlässig für Gase. Die Gase werden beim Durchdringen der Folie behindert, wodurch vermutlich die verbesserte Barrierewirkung entsteht. Die Schichtstruktur bildet eine Art Labyrinth, welches die Gase und Aromen passieren müssen. Aufgrund der geringen Teilchengröße sind die optischen Eigenschaften der Folie kaum beeinträchtigt.

Als Kunststofffolie werden ebenfalls bevorzugt Polyester und Polypropylen eingesetzt. Polyesterfolien weisen gute Barriereeigenschaften auf. Des Weiteren zeichnen sich derartige Folien durch gute Temperaturstabilität und erhöhte mechanische Stabilität aus.

Vorzugsweise weist eine Kunststoff-basierte Sperrschicht eine Dicke von 0,5 bis 50 $\mu$m auf.

Als anorganische Sperrschichten eignen sich besonders gut im Vakuum (zum Beispiel mittels Verdampfen, CVD, PVD, PECVD oder Sputtern) oder unter Atmosphärendruck (zum Beispiel mittels Atmosphärenplasma, reaktiver Coronaentladung oder Flammenpyrolyse) abgeschiedene metallische Schichten, die im Wesentlichen auf Metallen und insbesondere Metallverbindungen wie Metalloxiden, -nitriden oder -hydronitriden, beispielsweise Oxiden oder Nitriden des Siliziums, des Bors, des Aluminiums, des Zirkoniums, des Hafniums oder des Tellurs oder Indium-Zinn-Oxid (ITO) basieren. Ebenfalls geeignet sind mit weiteren Elementen dotierte Schichten der vorstehend genannten Varianten. Sehr gut geeignete Sperrschichten sind auch Metallfolien.

Vorzugsweise weist die metallische Schicht eine Dicke von 5 nm bis 100 $\mu$m auf, insbesondere 15 nm bis 50 $\mu$m.

Das Aufbringen der metallischen Schicht auf die Trägerschicht geschieht beispielsweise durch Bedampfen, also indem ein Überzug auf der Kunststofffolie durch thermisches Verdampfen im Vakuum (elektrisch mit Elektronenstrahlen, durch Kathodenzerstäubung oder Drahtexplosion, gegebenenfalls mit Hilfe von Laser-Strahlen) erzeugt wird. Dann weist die metallische Schicht vorzugsweise eine Dicke von 5 nm bis 100 nm, bevorzugt von 10 nm bis 30 nm auf.

Die metallische Schicht kann auch aus einer gewalzten Metallfolie bestehen. In diesem Fall weist die metallische Schicht vorzugsweise eine Dicke von 5 $\mu$m bis 100 $\mu$m, bevorzugt von 10 $\mu$m bis 30 $\mu$m auf.

Die metallische Schicht enthält bevorzugt mindestens 80 Gew.-%, bezogen auf das Gesamtgewicht der metallischen Schicht, Silber, Kupfer, Gold, Platin, Aluminium und Aluminiumverbindungen, Zinn, Nichrom, NIROSTA, Titan, Siliciumdioxide, Metalloxide wie Cadmiumoxide, Zinnoxide, Zinkoxide, Magnesiumoxide.

In einer speziellen Ausführungsform enthält der Releaseliner mindestens eine Trägerschicht und mindestens eine Sperrschicht gegen ein oder mehrere spezifische(s) Permeat(e), wobei die Sperrschicht und die Trägerschicht als unmittelbar aufeinander folgende Schichten vorliegen. Als besonders geeignetes Verfahren zum Aufbringen einer anorganischen Barriereschicht sind High-Power-Impulse-Magnetron-Sputtering und Atomic-Layer-Deposition zu nennen, durch die sich besonders permeationsdichte Schichten bei geringer Temperaturbelastung der Trägerschicht verwirklichen lassen. Bevorzugt wird eine Permeationsbarriere der Trägerschicht mit Barrierefunktion beziehungsweise des Verbundes aus Trägerschicht und Barriereschicht gegen Wasserdampf (WVTR) von < 1 g/(m$^{2*}$d) und/oder gegen Sauerstoff (OTR) von < 1 cm$^3$/(m$^{2*}$d*bar), besonders bevorzugt von < 0,1 g/(m$^{2*}$d) beziehungsweise von < 0,1 cm$^3$/(m$^{2*}$d*bar), wobei der Wert auf die jeweils im Liner verwendete Dicke der Trägerschicht bezogen ist, also nicht auf eine spezifische Dicke normiert ist. Die WVTR wird dabei bei 38°C und 90% relativer Luftfeuchtigkeit nach ASTM F-1249 und die OTR bei 23°C und 50% relativer Luftfeuchtigkeit nach DIN 53380-Teil 3 gemessen.

Besonders bevorzugt enthält der Releaseliner mindestens eine Trägerschicht und mindestens eine Sperrschicht, und die Sperrschicht enthält mindestens 80 Gew.-%, bezogen auf das Gesamtgewicht der Sperrschicht, Aluminium. Eine derartige Sperrschicht ist insbesondere eine aufgedampfte Aluminium-Schicht oder eine zukaschierte Aluminium-Folie.

Bevorzugt weist der Liner einen mehrschichtigen Aufbau, umfassend mindestens eine Trägerschicht, mindestens eine Sperrschicht und mindestens eine Trennschicht auf. Bevorzugt liegen die Schichten dabei in folgender, auf die abzudeckende Klebemasse gerichteter Abfolge vor: Trägerschicht, Sperrschicht, Trennschicht. Es ist jedoch erfindungsgemäß ebenfalls möglich, dass die vorgenannte Abfolge wie folgt lautet: Sperrschicht, Trägerschicht, Trennschicht. Die Verankerung der einzelnen Schichten ineinander kann durch physikalische Vorbehandlung der miteinander in Kontakt kommenden Oberflächen der Schichten unterstützt werden. Ebenso können die einzelnen Schichten durch einen Kaschierklebstoff oder einen Primer miteinander verbunden werden. Als Kaschierklebstoffe kommen insbesondere Haftklebemassen auf Basis von Synthesekautschuken und/oder Polyacrylaten, strahlenchemisch härtende Lacke, Heiß- oder Kaltsiegelschichten sowie chemisch aushärtende Zweikomponenten-Flüssigkleber in Frage.

Der Releaseliner kann darüber hinaus in einer oder mehreren Schichten sogenannte Getter- bzw. Scavenger-Materialien enthalten. Unter einem "Gettermaterial" bzw. "Scavenger"-Material wird ein Material verstanden, das mindestens eine permeationsfähige Substanz insbesondere durch Sorption selektiv aufnehmen kann. Das Gettermaterial ließe sich daher auch als "Sorbens" oder als "Sorptionsmittel" bezeichnen.

Unter einer "permeationsfähigen Substanz" wird eine Substanz verstanden, die als gasförmiger oder flüssiger, gegebenenfalls auch als fester Stoff, in die zu schützende Klebemasse eindringen und diese nachfolgend durchdringen kann. Derartige Substanzen werden auch als "Permeate" bezeichnet. Die Permeate können aus der Klebemasse selbst oder aus der Umgebung, beispielsweise auch aus dem Trägermaterial eines mit der Klebemasse beschichteten Klebebandes stammen. Aus der Klebemasse beziehungsweise aus dem Klebeband selbst kommen häufig niedermolekulare organische Verbindungen wie Lösemittelreste, Restmonomere, Öle, Harzkomponenten, Weichmacher sowie Wasser. Aus der Umgebung stammen oft Wasser, flüchtige organische Verbindungen (VOCs), niedermolekulare Kohlenwasserstoffe und Sauerstoff. Als "permeationsfähige Substanzen" werden insbesondere die folgenden Substanzen angesehen:

Acetonitril, 1-Butanol, Chlorbenzol, Chloroform (Trichlormethan), Cyclohexan, Diethylether, 1,4-Dioxan, Eisessig (Essigsäure), Essigsäureanhydrid, Essigsäureethylester (Ethylacetat, Essigester), Essigsäure-n-Butylester (n-Butylacetat), Essigsäure-tert.-butylester (t-Butylacetat), Ethanol, Methanol, n-Hexan, n-Heptan, 3-Hexanon, 2-Propanol (Isopropanol), 3-Methyl-1-butanol (Isoamylalkohol), Methylenchlorid (Dichlormethan), Methylethylketon (Butanon), Methylisobutylketon, Nitromethan (Nitrocarbol), n-Pentan, 2-Pentanon, 3-Pentanon, Petrolether (Leichtbenzin), Benzin, Propanol, Pyridin (Azin), tert-Butylmethylether, Tetrachlorethen (Perchlorethen), Tetrahydrofuran, Toluol, Trichlorethan, Triethylamin, Xylol, Sauerstoff, Methan, Ethan, Propan, Propen, Butan, Buten, Kohlenstoffdioxid, Ozon, Schwefeldioxid, Wasser. Vorzugsweise ist das Gettermaterial mindestens zur Sorption von Wasser befähigt.

Das bzw. die Gettermaterial(ien) können als dispergierte Phase in mindestens einer der Schichten des Liners enthalten sein oder als eigenständige Schicht im Liner enthalten sein.

Insbesondere als dispergiert vorliegend geeignete Getter- bzw. Scavenger-Materialien sind beispielsweise: Salze wie Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Aluminiumsulfat, Calciumsulfat, Kupfersulfat, Bariumsulfat, Magnesiumsulfat, Lithiumsulfat, Natriumsulfat, Cobaltsulfat, Titansulfat, Natriumdithionit, Natriumcarbonat, Natriumsulfat, Kaliumdisulfit, Kaliumcarbonat, Magnesiumcarbonat; Schichtsilikate wie Montmorillonit und Bentonit; Metalloxide wie Bariumoxid, Calciumoxid, Eisenoxid, Magnesiumoxid, Natriumoxid, Kaliumoxid, Strontiumoxid, Aluminiumoxid (aktiviertes Alumina) und Titandioxid; weiter Kohlenstoffnanoröhrchen, Aktivkohle, Phosphorpentoxid und Silane; leicht oxidierbare Metalle wie beispielsweise Eisen, Calcium, Natrium und Magnesium; Metallhydride wie beispielsweise Calciumhydrid, Bariumhydrid, Strontiumhydrid, Natriumhydrid und Lithiumaluminiumhydrid; Hydroxide wie Kaliumhydroxid und Natriumhydroxid; Metallkomplexe wie zum Beispiel Aluminiumacetylacetonat; weiterhin Kieselsäuren wie zum Beispiel Silica-Gel; Kieselgur; Zeolithe; des Weiteren organische Absorber, beispielsweise Polyolefin-Copolymere, Polyamid-Copolymere, PET-Copolyester, Anhydride von einfachen und mehrfachen Carbonsäuren wie Essigsäureanhydrid, Propionsäureanhydrid, Buttersäureanhydrid oder Methyltetrahydrophtalsäureanhydrid oder weitere auf Hybridpolymeren basierte Absorber, die meist in Kombination mit Katalysatoren wie beispielsweise Cobalt verwendet werden; weitere organische Absorber wie etwa schwach vernetzte Polyacrylsäure, Polyvinylalkohol, Ascorbate, Glucose, Gallussäure oder ungesättigte Fette und Öle. Vorteilhaft eingesetzt, insbesondere für die Bindung von Sauerstoff, werden weiterhin metallorganische Oxidationsadditive auf der Basis chelatbildender Amine und Übergangsmetallkomplexe, insbesondere in Verbindung mit oxidierbaren Substratmaterialien. Erfindungsgemäß können auch Mischungen aus zwei oder mehreren Gettermaterialien eingesetzt werden.

Für eigenständige Getterschichten geeignete Materialien sind insbesondere Lithium, Beryllium, Bor, Natrium, Magnesium, Silizium, Kalium, Calcium, Mangan, Eisen, Nickel, Zink, Gallium, Germanium, Cadmium, Indium, Cäsium, Barium, Boroxid, Calciumoxid, Chromoxid, Manganoxid, Eisenoxid, Kupferoxid, Silberoxid, Indiumoxid, Bariumoxid, Bleioxid, Phosphoroxid, Natriumhydroxid, Kaliumhydroxid, Metallsalze, Metallhydride, Anhydride von einfachen und mehrfachen Carbonsäuren, Natriumdithionit, Carbohydrazid, Ascorbate, Gallussäure, Zeolithe, Kohlenstoffnanoröhrchen, Aktivkohle und Carbodiimide sowie Mischungen von zwei oder mehreren der vorstehenden Substanzen.

In einer bevorzugten Ausführungsform ist der Releaseliner UV-blockierend ausgestaltet. Darunter wird verstanden, dass die Transmission von Licht des Wellenlängenbereichs von 190 bis 400 nm durch den Releaseliner hindurch weniger als 5%, bevorzugt weniger als 1% beträgt. Bevorzugt enthält der Releaseliner daher UV-Absorber, beispielsweise Tinuvin-Typen der BASF und/oder Farbpigmente, zum Beispiel Ruß und/oder Titandioxid. Derartige Additive können in der Trägerschicht und/oder in der Trennschicht des Liners vorliegen. Weiterhin können auch UV-blockierende Lagen auf die Rückseite des Trennliners kaschiert oder eine UV-blockierende Bedruckung oder Beschichtung auf der Rückseite des Liners oder zwischen Trägerschicht und Trennschicht aufgebracht sein. Eine derartige Beschichtung bewirkt unter Umständen zudem eine Glättung der Trägerschichtoberfläche, z. B. durch Glattrakeln eines Lacks.

Der Releaseliner weist bevorzugt einen geringen Gleichgewichtsfeuchtegehalt und somit nach Lagerung des Liners bei 23°C und 50% relativer Luftfeuchtigkeit für 24 h, anschließender sofortiger Einsiegelung in einen impermeablen Beutel und Überführung in die instantan durchgeführte Karl-Fischer-Bestimmung einen Wassergehalt nach Karl Fischer von weniger als 300 ppm, besonders bevorzugt von weniger als 150 ppm auf.

Das erfindungsgemäße Verbundsystem umfasst ferner mindestens ein Klebeband, das mindestens eine Haftklebemasse zur direkten Applikation auf einem Substrat enthält. Die Haftklebemasse ist bevorzugt eine aktivierbare Haftklebemasse.

Als Haftklebemassen werden Klebemassen bezeichnet, deren abgebundener Film bei Raumtemperatur in trockenem Zustand permanent klebrig und klebfähig bleibt. Haftklebemassen erlauben bereits unter relativ schwachem Andruck eine dauerhafte Verbindung mit dem Haftgrund und können nach Gebrauch im Wesentlichen rückstandsfrei vom Haftgrund wieder abgelöst werden. Die Verklebbarkeit der Klebemassen beruht auf ihren adhäsiven Eigenschaften und die Wiederablösbarkeit auf ihren kohäsiven Eigenschaften.

Erfindungsgemäß können alle dem Fachmann bekannten Haftklebemassen eingesetzt werden, insbesondere solche auf Basis unpolarer (thermoplastischer) Elastomere. Bevorzugt werden Haftklebemassen auf der Basis von Naturkautschuken, Synthesekautschuken, Butylkautschuken, Isobutylkautschuken; Polyolefinen, Fluorpolymeren; Polybutadienen, Polyisoprenen; Styrolblockcopolymeren, insbesondere solchen mit einem Elastomerblock aus ungesättigten oder hydrierten Polydienblöcken wie zum Beispiel Polybutadien, Polyisopren und Polyisobutylen sowie Copolymeren aus diesen sowie weiteren, dem Fachmann geläufigen Elastomerblöcken.

Im Sinne der Erfindung sind Kombinationen und Mischungen mehrerer Basispolymere sowie mit Klebharzen, Füllstoffen, Alterungsschutzmitteln und Vernetzern additivierte Klebemassen einsetzbar, wobei die Aufzählung der Additive nur beispielhaft und nicht einschränkend zu verstehen ist.

Als aktivierbare Haftklebemassen werden Klebemassensysteme angesehen, bei denen die endgültige Verklebung zusätzlich zur inhärenten Haftklebrigkeit durch einen Energieeintrag, zum Beispiel durch aktinische Strahlung oder Wärme, erfolgt.

Hitzeaktiviert verklebende Klebemassen lassen sich grundsätzlich in zwei Kategorien einordnen: thermoplastische hitzeaktiviert verklebende Klebemassen (Schmelzklebstoffe) und reaktive hitzeaktiviert verklebende Klebemassen (Reaktivklebstoffe). Ebenfalls umfasst sind solche Klebemassen, die sich beiden Kategorien zuordnen lassen, nämlich reaktive thermoplastische hitzeaktiviert verklebende Klebemassen (reaktive Schmelzklebstoffe).

Thermoplastische Klebemassen basieren auf Polymeren, die bei einem Erwärmen reversibel erweichen und während des Erkaltens wieder erstarren. Als thermoplastische Klebemassen haben sich insbesondere solche auf der Basis von Polyolefinen und Copolymeren von Polyolefinen sowie von deren säuremodifizierten Derivaten, von Ionomeren, von thermoplastischen Polyurethanen, von Polyamiden sowie Polyestern und deren Copolymeren und auch von Blockcopolymeren wie Styrol-Blockcopolymeren als vorteilhaft herausgestellt.

Im Gegensatz dazu enthalten reaktive hitzeaktiviert verklebende Klebemassen reaktive Komponenten. Letztere Bestandteile werden auch als "Reaktivharze" bezeichnet, in denen durch das Erwärmen ein Vernetzungsprozess eingeleitet wird, der nach Beenden der Vernetzungsreaktion eine dauerhafte stabile Verbindung gewährleistet. Bevorzugt enthalten derartige Klebemassen auch elastische Komponenten, zum Beispiel synthetische Nitrilkautschuke oder Stryrolblockcopolymere. Derartige elastische Komponenten verleihen der hitzeaktiviert verklebenden Klebemasse infolge ihrer hohen Fließviskosität eine auch unter Druck besonders hohe Dimensionsstabilität.

Strahlungsaktivierte Klebemassen basieren ebenfalls auf reaktiven Komponenten. Letztere Bestandteile können zum Beispiel Polymere oder Reaktivharze umfassen, in denen durch die Bestrahlung ein Vernetzungsprozess eingeleitet wird, der nach Beenden der Vernetzungsreaktion eine dauerhafte stabile Verbindung gewährleistet. Bevorzugt enthalten derartige Klebemassen auch elastische Komponenten, wie sie oben aufgeführt sind.

Bevorzugt werden aktivierbare Klebemassen auf der Basis von Epoxiden, Oxetanen, (Meth)-Acrylaten oder modifizierten Styrolblockcopolymeren eingesetzt.

Das Klebeband des erfindungsgemäßen Verbundes enthält zumindest eine Haftklebemasse, bevorzugt eine aktivierbare Haftklebemasse. Das Klebeband kann auch weitere Schichten enthalten, zum Beispiel eine oder mehrere weitere Klebemasseschichten oder ein Trägermaterial.

Bevorzugt enthält das Klebeband nur eine Schicht einer Klebemasse (Transferklebeband), da hierdurch der Aufbau einfach gehalten und die Zahl der zu berücksichtigenden möglichen Permeate durch die geringere Materialvielfalt klein gehalten werden kann.

Die Dicke des Klebebands kann alle üblichen Dicken umfassen, also etwa von 3 µm bis zu 500 µm. Bevorzugt wird eine Dicke zwischen 3 und 100 µm, da in diesem Bereich Klebkraft und Handlingeigenschaften besonders positiv ausfallen. Besonders bevorzugt ist eine Dicke von 3 bis 30 $\mu$m, beispielsweise 3 bis 25 $\mu$m, da in diesem Bereich die Menge von durch die Klebefuge permeierenden Stoffen allein durch die kleine Querschnittsfläche der Klebefuge in einer Verkapselungsanwendung gering gehalten werden kann. Je dünner jedoch eine Klebeschicht ist, desto geringer ist ihr Anpassungsvermögen an eine Oberfläche. Daher ist ein Verbund aus dünnem Klebeband und einem Liner mit erfindungsgemäßer Oberflächenrauheit besonders bevorzugt, weil sich auf diese Weise eine optimierte Verkapselung der üblicherweise glatten organoelektronischen Strukturen mit geringer Grenzflächenpermeation erreichen lässt.

Zur Herstellung des erfindungsgemäßen Verbundes aus Klebeband und Liner wird der Träger des Klebebandes oder der Liner einseitig mit dem bevorzugten Haftkleber des Klebebandes aus Lösung oder Dispersion oder 100 %ig (zum Beispiel Schmelze) beschichtet oder bedruckt, oder der Verbund wird durch Coextrusion hergestellt. Alternativ ist eine Verbundbildung durch Transfer einer Klebemasse-Schicht beziehungsweise eines Liners durch Kaschieren möglich. Die Klebemasseschicht(en) kann/können durch Wärme oder energiereiche Strahlen vernetzt werden.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutzmitteln, Alterungsschutzmitteln, Vernetzungsmitteln, Vernetzungspromotoren oder Elastomeren abgemischt sein.

Die Menge der Klebstoffschicht beträgt bevorzugt 3 bis 500 g/m$^2$, vorzugsweise 3 bis 100 g/m$^2$, besonders bevorzugt 3 bis 30 g/m$^2$, beispielsweise 3 bis 25 g/m$^2$, wobei unter "Menge" die Menge nach einer eventuell durchgeführten Entfernung von Wasser oder Lösungsmittel verstanden wird.

Ein weiterer Gegenstand der Offenbarung ist ein Verfahren zur Herstellung eines mindestens eine Trägerschicht enthaltenden Releaseliners mit einer Oberflächenrauheit mindestens einer Fläche zur Applikation auf einer Haftklebemasse, ermittelt als arithmetisches Mittel $S_a$ gemäß ISO/FDIS 25178-2:2011 der Beträge von mindestens 10.000 Höhenwerten des Profils einer Teilfläche von mindestens 200 $\mu$m x 200 $\mu$m, von kleiner als 100 nm, umfassend das Aufbringen mindestens einer Beschichtung auf die Trägerschicht mittels Glattrakeln. Hinsichtlich des Glattrakelns wird auf B. A. MacDonald et al., "Flexible Flat Panel Displays", C. P. Crawford (Hrsg.), 2005, Wiley, Hoboken, verwiesen.

Ein weiterer Gegenstand der Offenbarung ist die Verwendung eines Releaseliners, umfassend zumindest eine Seite mit einer Oberflächenrauheit, ermittelt als arithmetisches Mittel $S_a$ gemäß ISO/FDIS 25178-2:2011 der Beträge von mindestens 10.000 Höhenwerten des Profils einer Teilfläche von mindestens 200 $\mu$m x 200 $\mu$m, von kleiner als 100 nm zur Ausrüstung von Klebebändern zum Verkapseln optoelektronischer Anordnungen.

Ein weiterer Gegenstand der Erfindung ist die Verwendung eines Klebebandes, erhalten durch Entfernen des Releaseliners von einem erfindungsgemäßen Verbundsystem, zum Verkapseln optoelektronischer Anordnungen. Unter "Verkapseln" wird erfindungsgemäß jegliches vollständige oder teilweise Bedecken eines Gegenstandes mit dem Zweck, diesen Gegenstand vor äußeren Einflüssen, insbesondere vor dem Einsatzzweck des Gegenstandes entgegenwirkenden Substanzen, zu schützen.

Beispiele

Prüfmethoden

Oberflächenrauheit:

Die Oberflächenrauheit der Liner wurde mit einem Weißlicht-Interferometer Contour GT® 3D Optical Microscope der Firma Bruker bestimmt. Es lag die ISO 25178-602 zu Grunde. Das Gerät wurde im Vertical Scanning- (VSI-) Modus betrieben. Es wurde ein 20x-Objektiv und eine 1x-Feldlinse genutzt, so dass eine zwanzigfache Vergrößerung resultierte. Der Sichtbereich betrug 317 $\mu$m x 238 $\mu$m. Auf diese Fläche bezieht sich auch die ausgewertete Oberflächenrauheit $S_a$. Aus dem optisch aufgenommenen Höhenprofil wurde aus den Rohdaten gemäß ISO 25178-2 die Oberflächenrauheit als Mittelwert des 3D-Profils $S_a$ erhalten. $S_a$ ist das arithmetische Mittel der Beträge der Höhenwerte z aller in der x,y-Ebene des Sichtbereichs liegenden vermessenen Punkte. Es wurden jeweils drei Messungen durchgeführt und der Mittelwert der Einzelmessungen in nm angegeben. Der Abstand der vermessenen Punkte zueinander betrug sowohl in x- als auch in y-Richtung 0,5 $\mu$m.

Transparenz:

In einem doppelstrahligen UVIKON 923 UV/VIS-Spektralphotometer der Firma Bio-Tek Kontron Instruments wurde bei einer Wellenlänge von 200 nm, 300 nm und 400 nm die Transmission gemessen. Als Referenz diente der Leerkanal. Die Transmission wurde für die jeweilige Messwellenlänge in Prozent der eingestrahlten Lichtintensität bestimmt und arithmetisch gemittelt.

Wassergehalt (Karl-Fischer):

Die Bestimmung des Feuchtegehalts erfolgte nach Karl-Fischer nach DIN EN ISO 15512B. Es wurde ein Karl-Fischer Coulometer 851 verwendet. Nach Karl Fischer wird durch anodische Oxidation Iod aus Iodid erzeugt. Durch vorhandenes Wasser wird Iod wieder abgebaut, was coulometrisch verfolgt wird. Die Ofentemperatur betrug 140 °C, das Trägergas war Stickstoff mit einer Flussrate von 50 ml/min. Zur Titration kam Merck CombiCoulomat fritless zur Anwendung.

WVTR (Ca-Test):

Als ein Maß für die Bestimmung der Lebensdauer eines (opto-)elektronischen Aufbaus wurde ein Calciumtest herangezogen. Dazu wurde im Vakuum eine 10 mm x 10 mm große, dünne Calciumschicht auf eine Glasplatte abgeschieden und dann unter Stickstoff gelagert. Die Dicke der Calciumschicht lag bei etwa 100 nm. Für die Verkapselung der Calciumschicht wurde ein Klebeband (23 mm x 23 mm) mit der zu testenden Klebemasse mit einem 30 $\mu$m Dünnglas (Fa. Schott) als Trägermaterial verwendet mit WVTR (MOCON) = 0 g/m$^2$*d gemäß ASTM F-1249 und DIN 53380 Teil 3 und oben genannten Bedingungen. Das Klebeband wurde mit einem allseitigen Rand von 6,5 mm über dem Calciumspiegel appliziert, indem es direkt auf der Glasplatte haftete.

Der Test basiert auf der Reaktion von Calcium mit Wasserdampf und Sauerstoff, wie sie beispielsweise von A.G. Erlat et. al. in "47th Annual Technical Conference Proceedings - Society of Vacuum Coaters", 2004, Seiten 654-659, und von M. E. Gross et al. in "46th Annual Technical Conference Proceedings - Society of Vacuum Coaters", 2003, Seiten 89 bis 92, beschrieben ist. Dabei wird die Lichttransmission der Calciumschicht überwacht, welche durch die Umwandlung in Calciumhydroxid und Calciumoxid zunimmt. Das Erreichen von 85 % der Transmission des Aufbaus ohne Calciumschicht wird als Ende der Lebensdauer bezeichnet. Als Messbedingungen wurden 60 °C und 95 % rel. Luftfeuchte gewählt. Die Muster wurden mit einer Haftklebemasse mit einer Schichtdicke von 50 $\mu$m vollflächig und blasenfrei verklebt.

WVTR (MOCON):

Die Bestimmung der Volumenpermeabilität für Wasserdampf, WVTR (MOCON), erfolgte nach DIN 53380 Teil 3 beziehungsweise ASTM F-1249. Die Haftklebemasse wurde dazu in einer Schichtdicke von 50 $\mu$m auf eine permeable Membran aufgebracht. Die Wasserdampfdurchlässigkeit wurde bei 37,5 °C und einer relativen Feuchte von 90 % mit einem Messgerät Mocon OX-Tran 2/21 bestimmt.

Beispiel 1 (erfindungsgemäß):

Als Liner wurde ein Silikon-beschichteter PET-Liner mit einer Dicke von 38 $\mu$m verwendet. Er wies eine Oberflächenrauheit $S_a$ von 55 nm auf.

Die Klebemasse setzte sich zusammen aus einem Elastomer, einem Klebharz, einem Reaktivharz und einem Photoinitiator. Als Elastomer wurde Polystyrol-Polyisobutylen Blockcopolymer der Fa. Kaneka mit einem Anteil an Styrol im Gesamtpolymer von 20 % gewählt.

Es wurde Sibstar 62M (300 g) verwendet. Die Molmasse betrug 60 000 g/mol. Die Glasübergangstemperatur der Polystyrolblöcke betrug 100 °C und der Polyisobutylenblöcke -60 °C. Als Klebharz kam Escorez 5300 (Ring and Ball 105 °C, DACP = 71, MMAP = 72) der Fa. Exxon, ein vollhydriertes Kohlenwasserstoffharz (200 g), zum Einsatz. Als Reaktivharz wurde Uvacure 1500 der Fa. Dow ausgewählt, ein cycloaliphatisches Diepoxid (500 g). Die Glasübergangstemperatur von Uvacure 1500 betrug -53 °C. Diese Rohstoffe wurden in ein Gemisch aus Toluol (300 g), Aceton (150 g) und Siedegrenzenbenzin 60/95 (550g) eingearbeitet, so dass eine 50 % Lösung entstand.

Anschließend wurde der Lösung ein Photoinitiator zugesetzt. Hierzu wurden 10 g Triarylsulfoniumhexafluoroantimonat (bezogen von Fa. Sigma Aldrich) abgewogen. Der Photoinitiator lag als 50 %-ige Lösung in Propylencarbonat vor. Der Photoinitiator wies ein Absorptionsmaximum im Bereich 320 nm bis 360 nm auf.

Mittels eines Rakelverfahrens wurde die Formulierung aus Lösung auf den silikonisierten PET-Liner beschichtet, bei 110 °C für 15 min getrocknet und mit einer zweiten Lage des (gleichen) PET-Liners eingedeckt. Der Masseauftrag betrug 50 g/m$^2$. Einige dieser Muster wurden von den Linern befreit und im MOCON-Test im Hinblick auf die Volumenbarriere WVTR(MOCON) untersucht. Der Wert lag bei 9 g /m$^2$ d.

Weitere Muster wurden in eine Glove-Box (Wasser- und Sauerstoffgehalt jeweils 1 ppm) eingeschleust, der leichter trennende Liner ausgedeckt und die Muster offen für 3 Tage konditioniert. Diese Vorkonditionierung wurde vorgenommen, um den Einfluss etwaiger Restfeuchte in der Klebemasse auf den späteren Ca-WVTR-Test auszuschließen. Es ist bekannt, dass jedweder Feuchtegehalt in der Klebeschicht durch direkten Kontakt zum initialen Abbau der Calcium-Fläche im Ca-WVTR-Test führt, was zu einer Verfälschung der Testergebnisse im Bezug auf die Wasserpermeation führen kann. Die Muster wurden auf einem mit Calcium bedampften Glassubstrat mit einem Gummianroller blasenfrei laminiert. Darauf wurde der zweite PET-Liner ausgedeckt und eine Lage eines Dünnglases auflaminiert. Anschließend wurde durch das Abdeckglas mittels UV-Licht gehärtet. Die Härtung erfolgte mittels eines undotierten Quecksilber-Strahlers mit einer Dosis von 80 mJ/cm$^2$. Die so erhaltenen Muster wurden zur Untersuchung der Grenzflächenpermeation mittels einer WVTR (Ca-Test)-Messung verwendet. Das Ergebnis des Lebensdauertest aus der WVTR (Ca-Test)-Messung ergab 0,8 g / m$^2$*d.

Beispiel 2 (erfindungsgemäß):

Als Liner wurde eine BOPP-Folie mit einer Dicke von 50 $\mu$m ausgewählt, ausgerüstet mit einem UV-Silikon-basierenden Trennlack. Sie wies eine Oberflächenrauheit $S_a$ von 20 nm auf.

Es wurde die Klebmasse aus Beispiel 1 verwendet. Mittels eines Rakelverfahrens wurde die Formulierung aus Lösung auf den silikonisierten BOPP Liner beschichtet, bei 110 °C für 15 min getrocknet und mit einer zweiten Lage des (gleichen) BOPP-Liners eingedeckt. Der Masseauftrag betrug 50 g/m². Einige dieser Muster wurden von den Linern befreit und im MOCON-Test im Hinblick auf die Volumenbarriere WVTR(MOCON) untersucht. Der Wert lag bei 9 g /m²*d.

Weitere Muster wurden in eine Glove-Box (Bedingungen siehe Beispiel 1) eingeschleust, der leichter trennende Liner ausgedeckt und die Muster offen für 3 Tage konditioniert. Die Muster wurden auf einem mit Calcium bedampftem Glassubstrat mit einem Gummianroller blasenfrei laminiert. Darauf wurde der zweite BOPP-Liner ausgedeckt und eine Lage eines Dünnglases auflaminiert. Anschließend wurde durch das Abdeckglas mittels UV-Licht gehärtet (Bedingungen siehe Beispiel 1). Diese Muster wurden zur Untersuchung der Grenzflächenpermeation mittels einer WVTR (Ca-Test)-Messung verwendet.

Das Ergebnis des Lebensdauertest aus der WVTR (Ca-Test)-Messung ergab 0,6 g / m²*d.

Beispiel 3 (Vergleich):

Als Liner wurde eine MOPP-Folie mit einer Dicke von 50 μm ausgesucht, ausgerüstet mit einem UV-Silikon-basierenden Trennlack. Sie wies eine Oberflächenrauigkeit $S_a$ von 100 nm auf.

Es wurde die Klebemasse aus Beispiel 1 verwendet. Mittels eines Rakelverfahrens wurde die Formulierung aus Lösung auf die silikonisierte MOPP-Folie beschichtet, bei 110 °C für 15 min getrocknet und mit einer zweiten Lage der (gleichen) silikonisierten MOPP-Folie eingedeckt. Der Masseauftrag betrug 50 g/m². Einige dieser Muster wurden von den Linern befreit und im MOCON-Test im Hinblick auf die Volumenbarriere WVTR(MOCON) untersucht. Der Wert lag bei 9 g /m² d.

Weitere Muster wurden in eine Glove-Box (Bedingungen siehe Beispiel 1) eingeschleust, der leichter trennende Liner ausgedeckt und die Muster offen für 3 Tage konditioniert. Die Muster wurden auf einem mit Calcium bedampftem Glassubstrat mit einem Gummianroller blasenfrei laminiert. Darauf wurde der zweite MOPP-Liner ausgedeckt und eine Lage eines Dünnglases auflaminiert. Anschließend wurde durch das Abdeckglas mittels UV-Licht gehärtet (Bedingungen siehe Beispiel 1). Diese Muster wurden zur Untersuchung der Grenzflächenpermeation mittels einer WVTR (Ca-Test)-Messung verwendet.

Das Ergebnis des Lebensdauertest aus der WVTR (Ca-Test)-Messung ergab 1,3 g / m²*d.

Beispiel 4 (Vergleich):

Als Liner wurde eine andere MOPP-Folie mit einer Dicke von 50 μm ausgesucht, ausgerüstet mit einem UV-Silikon-basierenden Trennlack. Sie wies eine Oberflächenrauigkeit $S_a$ von 124 nm auf.

Es wurde die Klebmasse aus Beispiel 1 verwendet. Mittels eines Rakelverfahrens wurde die Formulierung aus Lösung auf den silikonisierten MOPP Liner beschichtet, bei 110 °C für 15 min getrocknet und mit einer zweiten Lage des (gleichen) MOPP-Liners eingedeckt. Der Masseauftrag betrug 50 g/m². Einige dieser Muster wurden von den Linern befreit und im MOCON-Test im Hinblick auf die Volumenbarriere WVTR(MOCON) untersucht. Der Wert lag bei 9 g /m²*d.

Weitere Muster wurden in eine Glove-Box (Bedingungen siehe Beispiel 1) eingeschleust, der leichter trennende Liner ausgedeckt und die Muster offen für 3 Tage konditioniert. Die Muster wurden auf einem mit Calcium bedampftem Glassubstrat mit einem Gummianroller blasenfrei laminiert. Darauf wurde der zweite MOPP-Liner ausgedeckt und eine Lage eines Dünnglases auflaminiert. Anschließend wurde durch das Abdeckglas mittels UV-Licht gehärtet (Bedingungen siehe Beispiel 1). Diese Muster wurden zur Untersuchung der Grenzflächenpermeation mittels einer WVTR (Ca-Test)-Messung verwendet.

Das Ergebnis des Lebensdauertest aus der WVTR (Ca-Test)-Messung ergab 1,9 g / m²*d.

In jedem der Beispiele kam die gleiche Klebemasse zum Einsatz. Ein Test der Volumenpermeation über die WVTR-MOCON Methode bestätigte, dass auch bei Verwendung im Hinblick auf Oberflächenrauheit unterschiedlicher Linertypen die Permeabilität von Wasserdampf durch das Volumen der Masse konstant war. Im Gegensatz zum WVTR-MOCON Test, der lediglich die Volumenpermeationseigenschaften eines Materials anzeigt, bildet der Ca-WVTR-Test zusätzlich die Grenzflächenpermeationseigenschaften eines Verbundes bestehend aus der Klebemasse und einem zu verklebenden Substrat ab. Da in den Beispielen 1 bis 4 gezeigt wurde, dass der Volumeneinfluss auf die Permeabilität unverändert ist, können die Unterschiede im Ca-WVTR-Test auf Unterschiede in der Grenzflächenpermeation zurückgeführt werden. Ein Vergleich der Beispiele 1 bis 4 zeigt, dass ein Liner mit erfindungsgemäß geringer Oberflächenrauheit zu reinem geringeren Ca-WVTR-Wert führt, was auf eine reduzierte Grenzflächenpermeation zurückgeführt werden kann.

**Patentansprüche**

1. Verbundsystem zur Verkapselung elektronischer Anordnungen, umfassend mindestens

    a) ein Klebeband, enthaltend mindestens eine Haftklebemasse zur direkten Applikation auf einem Substrat; und
    b) mindestens einen auf der Haftklebemasse unmittelbar aufliegenden Releaseliner, wobei die der Haftklebemasse zugewandte Fläche des Releaseliners eine Oberflächenrauheit, ermit-

telt als arithmetisches Mittel $S_a$ gemäß ISO/FDIS 25178-2:2011 der Beträge von mindestens 10.000 Höhenwerten des Profils einer Teilfläche von mindestens 200 μm x 200 μm, von kleiner als 70 nm aufweist und die Haftklebemasse eine Volumenpermeation WVTR (MOCON), gemessen wie in der Beschreibung angegeben, von < 10 g/(m$^{2*}$d) aufweist.

**2.** Verbundsystem gemäß mindestens einem der vorstehenden Ansprüche, **dadurch gekennzeichnet, dass** der Releaseliner mindestens eine Trägerschicht, enthaltend mindestens 80 Gew.-%, bezogen auf das Gesamtgewicht der Trägerschicht, Polyester und/oder Polyolefin, enthält.

**3.** Verbundsystem gemäß mindestens einem der vorstehenden Ansprüche, **dadurch gekennzeichnet, dass** der Releaseliner mindestens eine Trägerschicht, enthaltend mindestens 80 Gew.-%, bezogen auf das Gesamtgewicht der Trägerschicht, Polyolefin, enthält.

**4.** Verbundsystem gemäß mindestens einem der vorstehenden Ansprüche, **dadurch gekennzeichnet, dass** der Releaseliner mindestens eine Trägerschicht, bestehend aus Polypropylen, enthält.

**5.** Verbundsystem gemäß mindestens einem der vorstehenden Ansprüche, **dadurch gekennzeichnet, dass** der Releaseliner mindestens eine Trägerschicht und mindestens eine Sperrschicht enthält.

**6.** Verbundsystem gemäß Anspruch 5, **dadurch gekennzeichnet, dass** die Sperrschicht mindestens 80 Gew.-%, bezogen auf das Gesamtgewicht der Sperrschicht, Aluminium enthält.

**7.** Verbundsystem gemäß mindestens einem der vorstehenden Ansprüche, **dadurch gekennzeichnet, dass** die Transmission von Licht des Wellenlängenbereiches von 190 bis 400 nm durch den Releaseliner hindurch weniger als 5% beträgt.

**8.** Verwendung eines Klebebandes, erhalten durch Entfernen des Releaseliners von einem Verbundsystem gemäß mindestens einem der Ansprüche 1 bis 7, zum Verkapseln optoelektronischer Anordnungen.

## Claims

**1.** Composite system for the encapsulation of electronic arrangements, comprising at least

a) an adhesive tape comprising at least one pressure-sensitive adhesive for direct application on a substrate; and

b) at least one release liner superposed directly on the pressure-sensitive adhesive, where the surface roughness of the release liner surface facing toward the pressure-sensitive adhesive, determined as arithmetic mean $S_a$ in accordance with ISO/FDIS 25178-2:2011 of the magnitudes of at least 10 000 profile height values for an area of at least 200 μm × 200 μm, is smaller than 70 nm and the pressure-sensitive adhesive has a volume permeation WVTR (MOCON), measured as specified in the description, of < 10 g/(m$^2$*d).

**2.** Composite system according to at least one of the preceding claims, **characterized in that** the release liner comprises at least one carrier layer comprising at least 80% by weight, based on the total weight of the carrier layer, of polyester and/or polyolefin.

**3.** Composite system according to at least one of the preceding claims, **characterized in that** the release liner comprises at least one carrier layer comprising at least 80% by weight, based on the total weight of the carrier layer, of polyolefin.

**4.** Composite system according to at least one of the preceding claims, **characterized in that** the release liner comprises at least one carrier layer consisting of polypropylene.

**5.** Composite system according to at least one of the preceding claims, **characterized in that** the release liner comprises at least one carrier layer and at least one barrier layer.

**6.** Composite system according to Claim 5, **characterized in that** the barrier layer comprises at least 80% by weight, based on the total weight of the barrier layer, of aluminum.

**7.** Composite system according to at least one of the preceding claims, **characterized in that** the light transmittance through the release liner in the wavelength range from 190 to 400 nm is less than 5%.

**8.** Use, for the encapsulation of optoelectronic arrangements, of an adhesive tape obtained via removal of the release liner from a composite system according to at least one of Claims 1 to 7.

## Revendications

**1.** Système composite pour l'encapsulation de dispositifs électroniques, comprenant au moins :

a) une bande adhésive, contenant au moins une masse adhésive de contact pour l'application directe sur un substrat ; et

b) au moins un revêtement anti-adhérent disposé directement sur la masse adhésive de contact, la surface du revêtement anti-adhérent orientée vers la masse adhésive de contact présentant une rugosité de surface, calculée en tant que moyenne arithmétique $S_a$ selon ISO/FDIS 25178-2:2011 des montants d'au moins 10 000 valeurs de hauteur du profil d'une surface partielle d'au moins 200 $\mu$m x 200 $\mu$m, inférieure à 70 nm, et la masse adhésive de contact présentant une perméation volumique WVTR (MOCON), mesurée tel qu'indiqué dans la description, < 10 g/(m$^2$*d).

2. Système composite selon au moins l'une quelconque des revendications précédentes, **caractérisé en ce que** le revêtement anti-adhérent contient au moins une couche support, contenant au moins 80 % en poids, par rapport au poids total de la couche support, de polyester et/ou de polyoléfine.

3. Système composite selon au moins l'une quelconque des revendications précédentes, **caractérisé en ce que** le revêtement anti-adhérent contient au moins une couche support, contenant au moins 80 % en poids, par rapport au poids total de la couche support, de polyoléfine.

4. Système composite selon au moins l'une quelconque des revendications précédentes, **caractérisé en ce que** le revêtement anti-adhérent contient au moins une couche support, constituée par du polypropylène.

5. Système composite selon au moins l'une quelconque des revendications précédentes, **caractérisé en ce que** le revêtement anti-adhérent contient au moins une couche support et au moins une couche de barrière.

6. Système composite selon la revendication 5, **caractérisé en ce que** la couche de barrière contient au moins 80 % en poids, par rapport au poids total de la couche de barrière, d'aluminium.

7. Système composite selon au moins l'une quelconque des revendications précédentes, **caractérisé en ce que** la transmission de lumière de la plage de longueurs d'onde allant de 190 à 400 nm au travers du revêtement anti-adhérent est inférieure à 5 %.

8. Utilisation d'une bande adhésive, obtenue par élimination du revêtement anti-adhérent d'un système composite selon au moins l'une quelconque des revendications 1 à 7, pour l'encapsulation de dispositifs optoélectroniques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9821287 A1
- US 4051195 A
- US 4552604 A
- US 20040225025 A1
- US 20060100299 A1
- WO 2007087281 A1
- WO 03065470 A1
- US 4985499 A1
- US 20020188053 A1
- EP 2078608 A1
- DE 102009046362

- WO 2009086095 A
- US 4454266 A
- EP 1518912 A
- US 2009026934 A
- US 20100137530 A
- US 6153302 A
- EP 2100933 A1
- US 20100143634 A1
- WO 2008149890 A1
- US 20070231543 A1

**In der Beschreibung aufgeführte Nicht-Patentliteratur**

- **R. DITTMEYER et al.** Chemische Technik, Prozesse und Produkte. Wiley-VCH, 2005, vol. 5, 1142
- Flexible Flat Panel Displays. **B. A. MACDONALD et al.** Surface Engineering. Wiley, 2005
- **B. A. MACDONALD et al.** Flexible Flat Panel Displays. Wiley, 2005

- **A.G. ERLAT.** *47th Annual Technical Conference Proceedings - Society of Vacuum Coaters,* 2004, 654-659
- **M. E. GROSS et al.** *46th Annual Technical Conference Proceedings - Society of Vacuum Coaters,* 2003, 89-92